# EUROPEAN PATENT SPECIFICATION

(11) **EP 3 848 816 B1**
(45) Date of publication and mention of the grant of the patent: **11.11.2026**
(21) Application number: 20200480.0
(22) Date of filing: 07.10.2020
(51) Int. Cl.: G06F 16/25, G06F 16/28

(54) **METHOD, APPARATUS, AND STORAGE MEDIUM FOR STORING DETERMINANT TEXT**
VERFAHREN, VORRICHTUNG UND SPEICHERMEDIUM ZUM SPEICHERN EINES BESTIMMUNGSTEXTES
PROCÉDÉ, APPAREIL ET SUPPORT D'ENREGISTREMENT POUR UN TEXTE DÉTERMINANT

(30) Priority: 10.01.2020 CN 202010025931
(43) Date of publication of application: 14.07.2021
(73) Proprietor: BEIJING BAIDU NETCOM SCIENCE AND TECHNOLOGY CO. LTD., 100085 Beijing (CN)
(72) Inventor: WANG, Yang, Beijing, 100085 (CN); SONG, Xunchao, Beijing, 100085 (CN); YUAN, Pengcheng, Beijing, 100085 (CN); ZHANG, Haiping, Beijing, 100085 (CN); WANG, Yifei, Beijing, 100085 (CN)
(74) Representative: Maiwald GmbH

(56) References cited:
- US-A1- 2008 243 770
- SCOTT MARK ET AL: "A framework for user driven data management", INFORMATION SYSTEMS, ELSEVIER, AMSTERDAM, NL, vol. 42, 10 December 2013 (2013-12-10) - 10 December 2013 (2013-12-10), pages 36 - 58, XP028666520, ISSN: 0306-4379, DOI: 10.1016/J.IS.2013.11.004

## Description

### TECHNICAL FIELD

The invention relates to the field of data processing technologies, specifically to the field of text storage technologies, and more particularly, to a method and an apparatus for storing a determinant text, an electronic device, and a computer-readable storage medium.

### BACKGROUND

Graph database, originated from Euler and graph theory, is a graph-oriented/graph-based database. The graph database is a database to store and query data in a data structure of "graph", rather than a database to store pictures. The main input data of the graph database is determinant texts, and data retrieval is realized through large-scale storage of determinant texts.

In the related art, the following two methods are generally used to store determinant texts. The first one, the determinant text is converted into data in a json (JavaScript Object Notation) form for storage. However, in actual storage processes, data expands tremendously and a retrieval duration is long. The second one, the determinant text is stored sequentially, but the determinant texts stored sequentially have insufficient compression ratios, resulting in too many redundant fields and low retrieval efficiency.

Scott Mark et al, "A framework for user driven data management", Information Systems, Elsevier, Amsterdam, NL, vol. 42, (2013-12-10), pages 36-58, XP028666520, relates to a graph database for storing a document which is a collection of fields with associated values. The storage is based on object oriented languages.

### SUMMARY

In a first aspect, the invention provides a method for storing a determinant text according to independent claim 1.

In a second aspect, the invention provides an apparatus for storing a determinant text according to independent claim 5,

In a third aspect, the invention provides an electronic device according to independent claim 9.

In a fourth aspect, the invention provides a non-transitory computer-readable storage medium storing computer instructions herein according to independent claim 10.

Preferred or optional features are subject of the dependent claims.

The additional effects of the foregoing aspects will be described below in combination with specific embodiments.

### BRIEF DESCRIPTION OF THE DRAWINGS

The accompanying drawings are used to better understand the solution, and do not constitute a limitation on the invention, in which:
FIG. 1 is a flowchart of a method for storing a determinant text according to some embodiments of the invention.
FIG. 2 is a schematic diagram of storing a determinant text according to some embodiments of the invention.
FIG. 3 is a flowchart of a method for storing a determinant text according to some embodiments of the invention.
FIG. 4 is a flowchart of a method for storing a determinant text according to some embodiments of the invention.
FIG. 5 is a block diagram of an apparatus for storing a determinant text according to some embodiments of the invention.
FIG. 6 is a block diagram of an electronic device for implementing a method for storing a determinant text according to some embodiments of the invention.

### DETAILED DESCRIPTION

The following describes the exemplary embodiments of the invention with reference to the accompanying drawings, which includes various details of the embodiments of the invention to facilitate understanding and shall be considered merely exemplary. Therefore, those of ordinary skill in the art should recognize that various changes and modifications may be made to the embodiments described herein without departing from the scope and spirit of the invention. For clarity and conciseness, descriptions of well-known functions and structures are omitted in the following description.

In order to solve problems of insufficient compression ratio and low retrieval efficiency in a method for storing a determinant text in the related art, the invention provides a method for storing a determinant text. With the method for storing the determinant text in the invention, the determinant text that is to be stored is obtained, and the determinant text includes the plurality of fields. The valid fields are obtained from the plurality of fields. The field type table is queried according to the valid fields to generate the data description field of the determinant text. The value storage field of the determinant text is determined according to the contents of the plurality of fields and the field type table. The data description field and the value storage field are stored to store the determinant text.

A method for storing a determinant text, an apparatus for storing a determinant text, and an electronic device according to embodiments of the invention are described below with reference to the accompanying drawings.

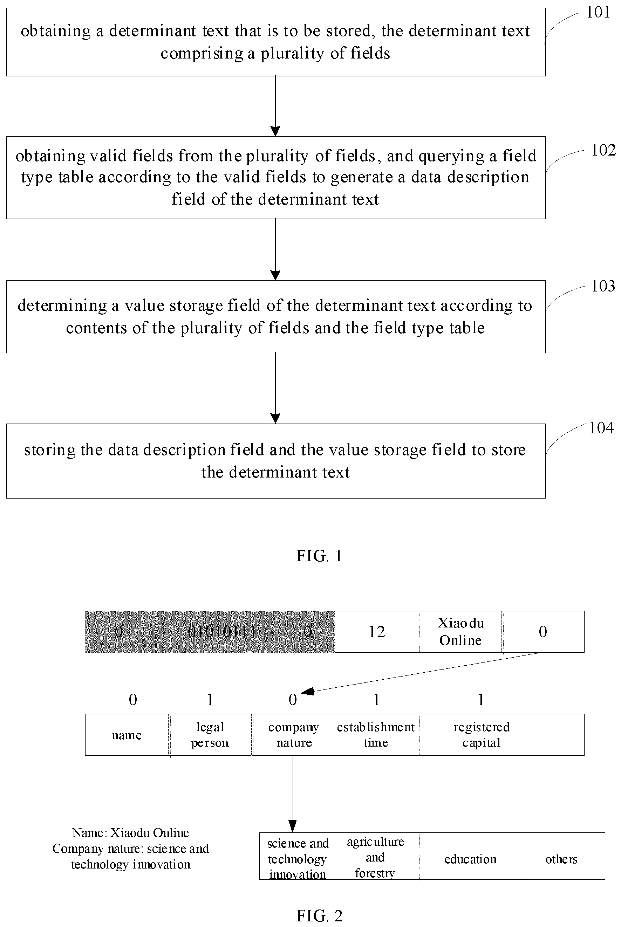

FIG. 1 is a flowchart of a method for storing a determinant text according to some embodiments of the invention.

As illustrated in FIG. 1, the method for storing the determinant text includes the following.

At block 101, a determinant text that is to be stored is obtained. The determinant text may include a plurality of fields.

In some embodiments of the invention, the determinant text, also called a CSV (Comma-Separated Values) text, is table data stored in a form of a text file. For example, the following table is an example determinant text.

| name | age | city |
|---|---|---|
| Zhang San | 20 | Beijing |
| Li Si | 26 | Shanghai |
| Wang Wu | 30 | Guangzhou |

In some embodiments of the invention, before storing the determinant text that is to be stored to the database, the determinant text that is to be stored is obtained first, and the determinant text that is to be stored includes the plurality of fields.

As can be seen from the above table, when storing the determinant text, the determinant text that is to be stored includes the plurality of fields, and "columns" in the table may be referred to as the fields, and each field contains information on a particular topic. As mentioned above, the determinant text includes a "name" field, an "age" field, and a "place of residence" field (e.g., a "city" field). For another example, in the "address" database, "name" and "contact number" are attributes common to all rows in the table, so these columns are called the "name" field and the "contact number" field.

At block 102, valid fields are obtained from the plurality of fields, and a field type table is queried according to the valid fields to generate a data description field of the determinant text.

At block 103, a value storage field of the determinant text is determined according to contents of the plurality of fields and the field type table.

The field type table includes a plurality of types. Each of the plurality of types includes a corresponding type identifier and a set of subtypes. Each subtype in the set of subtypes has a corresponding subtype serial number and an attribute. The attribute includes an attribute number, an attribute type, a default value and a determination on whether a corresponding value is allowed to be null.

The valid fields in the plurality of fields included in the determinant text may refer to fields that need to be stored in the determinant text that is to be stored.

In some embodiments of the invention, the determinant text that is to be stored may be divided into two fields, namely the data description field and the value storage field.

In some embodiments of the invention, after obtaining the determinant text that is to be stored, the valid fields in the plurality of fields included in the determinant text may be obtained, and the field type table may be queried according to the valid fields to generate the data description field of the determinant text.

In some embodiments of the invention, the value storage field of the determinant text may be determined according to contents of the plurality of fields included in the determinant text that is to be stored and the field type table.

At block 104, the data description field and the value storage field are stored to store the determinant text.

In some embodiments of the invention, after generating the data description field and the value storage field of the determinant text data that is to be stored, the data description field and the value storage field constitute data of the determinant text for storage. Therefore, the compression and storage of the determinant text is realized, and the compression rate during data storage is improved.

Most of data in the determinant text may have default values, for example, "nation" may have a default of "Han", "Gender" may have a default of "Male" or "Female". For the value repeatedly used, the default value may also be set, then there is no need to store this value when storing, the value may be expressed by one bit, and the compression rate when performing storage on the determinant text is very high.

For example, as illustrated in FIG. 2, for data, a gray portion is the data description field. The valid fields are marked in FIG. 2. The determinant text is that name: "Xiaodu Online", Company nature: "science and technology innovation", and there is no "legal person", "establishment time" and "registered capital" in the determinant text. When storing the determinant text, there is no need to store "legal person", "establishment time" and "registered capital", and it only needs to mark the fields in the attribute states. "Company nature" is directly written as 0 firstly, and after querying the determinant text, this field is an enumeration value, and 0 represents the first enumeration value, so the value of "Company nature" is "science and technology innovation".

If the "establishment time" field is obtained, and it finds that the field does not exist through the attribute state, the determinant text is directly queried, and if there is a default value, the default value is returned.

Compared to the problem of inefficient retrieval in the sequential storage of the determinant texts, after storing the determinant text in the invention, when retrieving the content of the determinant text, since the attribute number or even the entire data description field may be stored, the status of the field is quickly located during retrieval, for example, whether the field exists, and where is the field located in the value storage field.

In some embodiments of the invention, the determinant text that is to be stored is obtained, and the determinant text that is to be stored includes the plurality of fields. The valid fields are obtained from the plurality of fields, and the field type table is queried according to the valid fields to generate the data description field of the determinant text. The value storage field of the determinant text is determined according to the contents of the plurality of fields and the field type table, and the determinant text data and the value storage field are stored as data of the determinant text. In this solution, the data description field and the value storage field of the determinant text are determined, and the data description field and the value storage field constitute the data of the determinant text for storage, thus the compression ratio of the determinant text for storage and data retrieval effectiveness are improved.

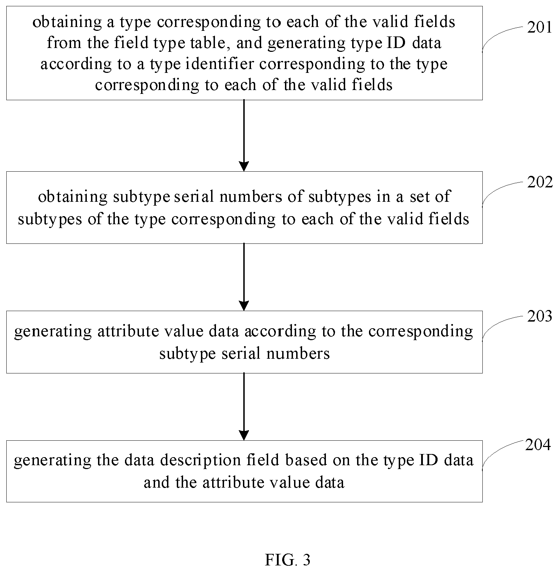

As a possible implementation, in the above block 102, when querying the field type table according to the valid fields to generate the data description field of the determinant text, a type corresponding to each of the valid fields may also be obtained from the field type table, and type ID data is generated according to a type identifier corresponding to the type corresponding to each of the valid fields. Subtype serial numbers of subtypes in a set of subtypes, of the type corresponding to each of the valid fields, may be obtained, and attribute value data is generated according to the corresponding subtype serial numbers. Further, according to the type ID data and the attribute value data, the data description field is generated. The implementation process is described in detail below in combination with FIG. 3. FIG. 3 is a flowchart of a method for storing a determinant text according to some embodiments of the invention.

As illustrated in FIG. 3, the method for storing the determinant text may include the following.

At block 201, a type corresponding to each of the valid fields is obtained from the field type table, and type ID data is generated according to a type identifier corresponding to the type corresponding to each of the valid fields. That is, each type corresponding to the determinant text in the field type table is obtained, and the type ID data is generated according to each corresponding type identifier.

The types in the field type table may be an integer type, a floating type, a character string type, an enumerated type, and a date and time type.

The enumerated type is a very special type, basically not in other databases. Similar to a foreign key table of mysql, in fact, in a real example, the field types of a large part of data are enumerated types, for example, "Company Type", "Industry", "Gender", "Transaction Type", and "Country & Region".

In some embodiments of the invention, after obtaining the plurality of fields included in the determinant text, the type to which each field belongs is determined in the corresponding field type table, and type ID data is generated according to the type identifier corresponding to each field.

For example, if the determinant text includes a company field, a bank field, and a personal field, each field corresponds to one type ID data, for example, the type ID data corresponding to the company field may be num1.

At block 202, subtype serial numbers of subtypes in a set of subtypes of the type corresponding to each of the valid fields are obtained. That is, the subtype serial numbers of the subtypes in the sets of subtypes, of the types corresponding to the valid fields, are obtained.

In some embodiments of the invention, not all fields in the plurality of fields included in the determinant text are valid fields. In order to improve the compression rate when storing the determinant text, the subtype serial numbers of the subtypes in the sets of subtypes, of the types corresponding to the valid fields, may be obtained.

At block 203, attribute value data is generated according to the corresponding subtype serial numbers.

In some embodiments of the invention, after obtaining the subtype serial number of each subtype, attribute value data is generated according to a determination on whether each subtype exists in the determinant text.

For example, the field types included in the field type table and in the determinant text are "name", "legal person", "company nature", "establishment time" and "registered capital", and the set of subtypes corresponding to the field type "company nature" are "science and technology innovation", "agriculture and forestry", "education" and "others". After obtaining the subtype serial number of each subtype in the set of subtypes, corresponding to each of the types of the valid fields, it is determined that the attribute value data of the type "name" and "company nature" both is 1, and the attribute value data generated by the remaining types are all 0. There is no need to store fields whose attribute value data is 0, thereby improving the data compression rate during data storage and saving storage space.

At block 204, the data description field is generated based on the type ID data and the attribute value data.

Both the type ID data and the attribute value data are variable-length integers. The type ID data and the attribute value data are compressed and stored by using "a reference length plus a step length" to avoid reserving a lot of space during data storage. Therefore, the compression rate of data storage is improved, and the space for data storage is saved.

The variable-length integer employs 1 flag bit and 7 data bits to compress a positive integer value. The role of the flag bit is to indicate whether the value of the remaining data bits except for 7 data bits, is 0. The specific calculation method is as follows. AND operation is performed between the value and 0x7f. If the value is 0, the effective data bit of the value is 7 bits, otherwise, the value is 1, which indicates that there is still valid data, and the value is shifted to the right by 7 bits to continue the above steps until the value is 0, thereby achieving compression and storage of data and improving data compression rate.

In some embodiments of the invention, after determining the type ID data corresponding to each field in the determinant text and attribute values corresponding to the valid fields, the data description field is generated according to the type ID data and the attribute value data.

The method for storing the determinant text according to the embodiments of the invention, by obtaining the type corresponding to the determinant text in the field type table, and the type ID data is generated according to the type identifier of the corresponding type. The subtype serial number of the subtype in the set of subtypes, of each type corresponding to the valid fields, is obtained. The attribute value data according to the corresponding subtype serial number is generated. Data description field is generated based on the type ID data and the attribute value data. As a result, the data compression rate during data storage is improved, and storage space is saved.

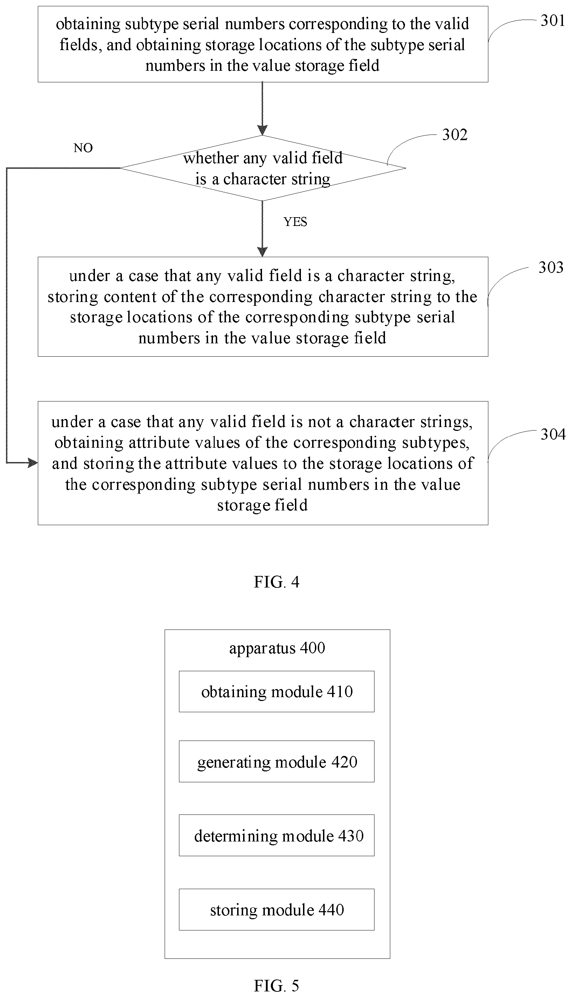

As a possible implementation, at the above block 103, when determining the value storage field of the determinant text according to the contents of the plurality of fields and the field type table, subtype serial numbers corresponding to the valid fields are obtained, and storage locations of the subtype serial number in the value storage field are obtained to store the valid fields based on whether the valid fields are character strings. The above process is described in detail below in combination with FIG. 4. FIG. 4 is a flowchart of a method for storing a determinant text according to some embodiments of the invention.

As illustrated in FIG. 4, the method for storing the determinant text includes the following.

At block 301, subtype serial numbers corresponding to the valid fields are obtained, and storage locations of the subtype serial numbers in the value storage field are obtained.

In some embodiments of the invention, the determinant text that is to be stored is obtained, and the valid fields in the plurality of fields included in the determinant text are determined. Further, the subtype serial numbers corresponding to the valid fields and the storage locations of the subtype serial numbers in the value storage field are obtained.

For example, if the determinant text that is to be stored includes types of "company", "bank", and "personal", the type of "company" includes subtypes of "name", "legal person", "company nature", "establishment time" and "registered capital". In addition, each subtype has a corresponding subtype serial number and attribute. The attribute includes an attribute number, an attribute type, a default value, and a determination on whether the value is allowed to be null.

Taking the example in FIG. 2 as an example, suppose the determinant text that is to be stored is the name: "Xiaodu Online"; company nature: "science and technology innovation", the subtypes corresponding to the valid fields of the determinant text that is to be stored may be "name" and "company nature". Further, the subtype serial numbers corresponding to the valid fields and the storage locations of the subtype serial numbers in the value storage field are obtained.

At block 302, it is determined whether any valid field is a character string.

In some embodiments of the invention, after obtaining the valid fields of the determinant text that is to be stored, it is determined whether any valid field is the character string, so as to store the valid field according to the type corresponding to the valid field.

At block 303, if it is determined that any valid field is a character string, content of the corresponding character string is stored to the storage locations of the corresponding subtype serial numbers in the value storage field.

In some embodiments of the invention, when it is determined that any valid field of the determinant text that is to be stored is the character string, the character string content of the valid field may be stored to the storage locations of the corresponding subtype serial numbers in the value storage field.

At block 304, if it is determined that any valid field is not a character string, attribute values of the corresponding subtypes are obtained, and the attribute values are stored to the storage locations of the corresponding subtype serial numbers in the value storage field.

In some embodiments of the invention, when it is determined that any valid field of the determinant text that is to be stored is not the character string, the attribute values of the subtypes corresponding to the valid field are obtained, and the attribute values are stored to the storage locations of the corresponding subtype serial numbers in the value storage field.

For example, as illustrated in FIG. 2, since the attribute value of the subtype corresponding to "company nature" is 0, after querying the field type table, it is determined that the field corresponding to "business nature" is an enumeration type. 0 represents a first value of the enumeration type, so the value corresponding to "company nature" is "science and technology innovation". Therefore, after obtaining the attribute value of the subtype corresponding to "company nature", the attribute value is stored to the storage location of the subtype serial number in the value storage field.

With the method for storing the determinant text, by obtaining the subtype serial numbers corresponding to the valid fields, and the storage locations of the subtype serial numbers in the value storage field, if it is determined that any valid field is the character string, the content of the character string of the valid field may be stored to the storage locations of the subtype serial numbers in the value storage field, and if it is determined that any valid field is not the character string, the attribute values of the subtypes corresponding to the valid field are obtained, and the attribute values are stored to the storage locations of the subtype serial numbers in the value storage field. Therefore, the compression ratio when storing the determinant text that is to be stored is improved, and the storage space is saved.

In order to implement the above embodiments, the embodiments of the invention provide an apparatus for storing a determinant text.

FIG. 5 is a block diagram of an apparatus for storing a determinant text according to some embodiments of the invention.

As illustrated in FIG. 5, the apparatus 400 for storing the determinant text includes: an obtaining module 410, a generating module 420, a determining module 430, and a storing module 440.

The obtaining module 410 is configured to obtain a determinant text that is to be stored, the determinant text including a plurality of fields.

The generating module 420 is configured to obtain valid fields from the plurality of fields, and query a field type table according to the valid fields to generate a data description field of the determinant text.

The determining module 430 is configured to determine a value storage field of the determinant text according to contents of the plurality of fields and the field type table.

The storing module 440 is configured to store the data description field and the value storage field to store the determinant text.

As a possible implementation, the field type table includes a plurality of types. Each of the plurality of types includes a type identifier and a set of subtypes. Each subtype in the set of subtypes has a corresponding subtype serial number and an attribute. The attribute includes an attribute number, an attribute type, a default value and a determination on whether a corresponding value is allowed to be null.

As a possible implementation, the generating module 420 is further configured to: obtain a type corresponding to each of the valid fields from the field type table; generate type ID data according to a type identifier corresponding to the type corresponding to each of the valid fields; obtain subtype serial numbers of subtypes in a set of subtypes of the type corresponding to each of the valid fields; generate attribute value data according to the corresponding subtype serial numbers; and generate the data description field based on the type ID data and the attribute value data.

As a possible implementation, the determining module 430 is further configured to: obtain subtype serial numbers corresponding to the valid fields; obtain storage locations of the subtype serial numbers in the value storage field; under a case that any valid field is a character string, store content of the corresponding character string to the storage locations of the corresponding subtype serial numbers in the value storage field; and under a case that any valid field is not a character strings, obtain attribute values of the corresponding subtypes, and store the attribute values to the storage locations of the corresponding subtype serial numbers in the value storage field.

As a possible implementation, the type ID data and the attribute value data are stored as variable-length integers.

With the apparatus for storing the determinant text according to embodiments of the invention, the determinant text that is to be stored is obtained, and the determinant text that is to be stored includes the plurality of fields. The valid fields are obtained from the plurality of fields, and the field type table is queried according to the valid fields to generate the data description field of the determinant text. The value storage field of the determinant text is determined according to the contents of the plurality of fields and the field type table, and the determinant text data and the value storage field are stored as data of the determinant text. In this solution, the data description field and the value storage field of the determinant text are determined, and the data description field and the value storage field constitute the data of the determinant text for storage, thus the compression ratio of the determinant text for storage and data retrieval effectiveness are improved.

According to the embodiments of the invention, the invention also provides an electronic device and a readable storage medium.

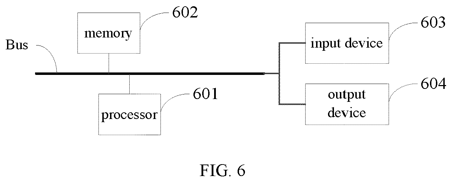

FIG. 6 is a block diagram of an electronic device for implementing the method for storing the determinant text according to some embodiments of the invention. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the invention described and/or required herein.

As illustrated in FIG. 6, the electronic device includes: one or more processors 601, a memory 602, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 601 is taken as an example in FIG. 6.

The memory 602 is a non-transitory computer-readable storage medium according to the invention. The memory stores instructions executable by at least one processor, so that the at least one processor executes the method according to the invention. The non-transitory computer-readable storage medium of the invention stores computer instructions, which are used to cause a computer to execute the method according to the invention.

As a non-transitory computer-readable storage medium, the memory 602 is configured to store non-transitory software programs, non-transitory computer executable programs and modules, such as program instructions/modules corresponding to the method in the embodiments of the invention (For example, the obtaining module 410, the generating module 420, the determining module 430, and the storing module 440 shown in FIG. 4). The processor 601 executes various functional applications and data processing of the server by running non-transitory software programs, instructions, and modules stored in the memory 602, that is, implementing the method for storing the determinant text in the foregoing method embodiment.

The memory 602 may include a storage program area and a storage data area, where the storage program area may store an operating system and application programs required for at least one function. The storage data area may store data created according to the use of the electronic device, and the like. In addition, the memory 602 may include a high-speed random access memory, and a non-transitory memory, such as at least one magnetic disk storage device, a flash memory device, or other non-transitory solid-state storage device. In some embodiments, the memory 602 may optionally include a memory remotely disposed with respect to the processor 601, and these remote memories may be connected to the electronic device through a network. Examples of the above network include, but are not limited to, the Internet, an intranet, a local area network, a mobile communication network, and combinations thereof.

The electronic device for implementing the method for storing the determinant text may further include: an input device 603 and an output device 604. The processor 601, the memory 602, the input device 603, and the output device 604 may be connected through a bus or in other manners. In FIG. 6, the connection through the bus is taken as an example.

The input device 603 may receive inputted numeric or character information, and generate key signal inputs related to user settings and function control of an electronic device, such as a touch screen, a keypad, a mouse, a trackpad, a touchpad, an indication rod, one or more mouse buttons, trackballs, joysticks and other input devices. The output device 604 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (egg, a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

With the method for storing the determinant text according to embodiments of the invention, the determinant text that is to be stored is obtained, and the determinant text that is to be stored includes the plurality of fields. The valid fields are obtained from the plurality of fields, and the field type table is queried according to the valid fields to generate the data description field of the determinant text. The value storage field of the determinant text is determined according to the contents of the plurality of fields and the field type table, and the determinant text data and the value storage field are stored as data of the determinant text. **In** this solution, the data description field and the value storage field of the determinant text are determined, and the data description field and the value storage field constitute the data of the determinant text for storage, thus the compression ratio of the determinant text for storage and data retrieval effectiveness are improved.

It should be understood that various forms of processes shown above may be used to reorder, add, or delete steps. For example, the steps described in the invention may be performed in parallel, sequentially, or in different orders. As long as the desired results of the technical solutions disclosed in the invention can be achieved, no limitation is made herein.

The above specific embodiments do not constitute a limitation on the protection scope of the invention. Those skilled in the art should understand that various modifications, combinations, sub-combinations and substitutions can be made according to design requirements and other factors.

## Claims

1. A method for storing a determinant text, comprising:
obtaining (101) a determinant text that is to be stored, the determinant text comprising a plurality of fields, wherein the determinant text is table data stored in a form of a text file;
obtaining (102) valid fields from the plurality of fields, the valid fields being fields that need to be stored in the determinant text that is to be stored;
querying (102) a field type table according to the valid fields to generate a data description field of the determinant text, wherein the field type table comprises a plurality of types, the plurality of types comprise an integer type, a floating type, a character string type, an enumerated type, and a date and time type, each of the plurality of types comprises a type identifier and a set of subtypes; each subtype in the set of subtypes has a corresponding subtype serial number and an attribute, the attribute comprises an attribute number, an attribute type, a default value and a determination on whether a corresponding value is allowed to be null; wherein the querying (102) the field type table according to the valid fields to generate the data description field of the determinant text, comprises:
obtaining (201) a type corresponding to each of the valid fields from the field type table;
generating (201) type ID data according to a type identifier corresponding to the type corresponding to each of the valid fields;
obtaining (202) subtype serial numbers of subtypes in a set of subtypes of the type corresponding to each of the valid fields;
generating (203) attribute value data according to the corresponding subtype serial numbers, wherein the attribute value data is generated according to a determination on whether each subtype exists in the determinant text; and
generating (204) the data description field based on the type ID data and the attribute value data;
determining (103) a value storage field of the determinant text according to contents of the plurality of fields and the field type table; and
storing (104) the data description field and the value storage field to store the determinant text.

2. The method as claimed in claim 1, wherein the determining (103) the value storage field of the determinant text according to the contents of the plurality of fields and the field type table comprises:
determining the value storage field of the determinant text according to contents of the valid fields and the field type table.

3. The method as claimed in claim 2, wherein the determining the value storage field of the determinant text according to contents of the valid fields and the field type table comprises:
obtaining (301) subtype serial numbers corresponding to the valid fields;
obtaining (301) storage locations of the subtype serial numbers in the value storage field;
under a case that any valid field is a character string, storing (303) content of the corresponding character string to the storage locations of the corresponding subtype serial numbers in the value storage field; and
under a case that any valid field is not a character strings, obtaining (304) attribute values of the corresponding subtypes, and storing (304) the attribute values to the storage locations of the corresponding subtype serial numbers in the value storage field.

4. The method as claimed in any one of claims 1 to 3, wherein the type ID data and the attribute value data are stored as variable-length integers.

5. An apparatus (400) for storing a determinant text, comprising:
an obtaining module (410), configured to obtain a determinant text that is to be stored, the determinant text comprising a plurality of fields, wherein the determinant text is table data stored in a form of a text file;
a generating module (420), configured to obtain valid fields from the plurality of fields, and query a field type table according to the valid fields to generate a data description field of the determinant text, the valid fields being fields that need to be stored in the determinant text that is to be stored;
a determining module (430), configured to determine a value storage field of the determinant text according to contents of the plurality of fields and the field type table, wherein the field type table comprises a plurality of types, the plurality of types comprise an integer type, a floating type, a character string type, an enumerated type, and a date and time type, each of the plurality of types comprises a type identifier and a set of subtypes; each subtype in the set of subtypes has a corresponding subtype serial number and an attribute, the attribute comprises an attribute number, an attribute type, a default value and a determination on whether a corresponding value is allowed to be null;
wherein the generating module (420) is configured to:
obtain a type corresponding to each of the valid fields from the field type table;
generate type ID data according to a type identifier corresponding to the type corresponding to each of the valid fields;
obtain subtype serial numbers of subtypes in a set of subtypes of the type corresponding to each of the valid fields;
generate attribute value data according to the corresponding subtype serial numbers, , wherein the attribute value data is generated according to a determination on whether each subtype exists in the determinant text; and
generate the data description field based on the type ID data and the attribute value data; and
a storing module (440), configured to store the data description field and the value storage field to store the determinant text.

6. The apparatus (400) as claimed in claim 5, wherein the determining module (430) is configured to: determine the value storage field of the determinant text according to contents of the valid fields and the field type table.

7. The apparatus (400) as claimed in claim 6, wherein the determining module (430) is configured to:
obtain subtype serial numbers corresponding to the valid fields;
obtain storage locations of the subtype serial numbers in the value storage field;
under a case that any valid field is a character string, store content of the corresponding character string to the storage locations of the corresponding subtype serial numbers in the value storage field; and
under a case that any valid field is not a character strings, obtain attribute values of the corresponding subtypes, and store the attribute values to the storage locations of the corresponding subtype serial numbers in the value storage field.

8. The apparatus (400) as claimed in any one of claims 5 to 7, wherein the type ID data and the attribute value data are stored as variable-length integers.

9. An electronic device, comprising:
at least one processor; and
a memory having communication connection to the at least one processor and configured to store instructions executable by the at least one processor,
when the instructions are executed by the at least one processor, the at least one processor is caused to execute the method for storing the determinant text according to any one of claims 1-4.

10. A computer-readable storage medium storing computer instructions thereon, wherein the computer instructions are configured to cause a computer to execute the method for storing the determinant text according to any one of claims 1-4.

## Patentansprüche

1. Verfahren zum Speichern eines Bestimmungstextes, umfassend:
Erhalten (101) eines Bestimmungstextes, wobei der Bestimmungstext eine Vielzahl von Feldern umfasst und in Form einer Textdatei gespeichert ist;
Ermitteln (102) gültiger Felder aus der Vielzahl von Feldern, wobei die gültigen Felder Felder sind, die in dem Bestimmungstext gespeichert werden müssen;
Abfragen (102) einer Feldtyptabelle entsprechend den gültigen Feldern, um ein Datenbeschreibungsfeld des Bestimmungstextes zu erzeugen, wobei die Feldtyptabelle eine Vielzahl von Typen umfasst, wobei die Vielzahl von Typen einen Ganzzahltyp, einen Gleitkommatyp, einen Zeichenfolgentyp, einen Aufzählungstyp und einen Datums- und Uhrzeittyp umfasst, wobei jeder der Vielzahl von Typen eine Typkennung und eine Menge von Untertypen umfasst; jeder Untertyp in der Menge der Untertypen eine entsprechende Untertyp-Seriennummer und ein Attribut aufweist, wobei das Attribut eine Attributnummer, einen Attributtyp, einen Standardwert und eine Festlegung darüber umfasst, ob ein entsprechender Wert null sein darf; wobei das Abfragen (102) der Feldtyptabelle entsprechend den gültigen Feldern zur Erzeugung des Datenbeschreibungsfeldes des Bestimmungstextes umfasst:
Ermitteln (201) eines Typs, der jedem der gültigen Felder entspricht, aus der Feldtyptabelle;
Erzeugen (201) von Typ-ID-Daten entsprechend einer Typ-Kennung, die dem jedem der gültigen Felder entsprechenden Typ entspricht;
Ermitteln (202) von Subtyp-Seriennummern von Subtypen in einer Menge von Subtypen des Typs, der jedem der gültigen Felder entspricht;
Erzeugen (203) von Attributwertdaten entsprechend den entsprechenden Subtyp-Seriennummern, wobei die Attributwertdaten entsprechend einer Feststellung erzeugt werden, ob der jeweilige Subtyp im Bestimmungstext vorhanden ist; und
Erzeugen (204) des Datenbeschreibungsfeldes auf der Grundlage der Typ-ID-Daten und der Attributwertdaten;
Ermitteln (103) eines Wertspeicherfelds des Bestimmungstextes entsprechend den Inhalten der mehreren Felder und der Feldtyp-Tabelle; und
Speichern (104) des Datenbeschreibungsfeldes und des Wert-Speicherfeldes, um den Bestimmungstext zu speichern.

2. Verfahren nach Anspruch 1, wobei das Bestimmen (103) des Wertespeicherfeldes des Bestimmungstextes entsprechend dem Inhalt der mehreren Felder und der Feldtyptabelle umfasst:
Ermitteln des Wert-Speicherfelds des Bestimmungstextes entsprechend den Inhalten der gültigen Felder und der Feldtyp-Tabelle.

3. Verfahren nach Anspruch 2, wobei das Bestimmen des Wertespeicherfelds des Bestimmungstextes gemäß dem Inhalt der gültigen Felder und der Feldtyp-Tabelle umfasst:
Ermitteln (301) von Subtyp-Seriennummern, die den gültigen Feldern entsprechen;
Ermitteln (301) von Speicherorten der Subtyp-Seriennummern im Wertespeicherfeld;
für den Fall, dass ein gültiges Feld eine Zeichenkette ist, Speichern (303) des Inhalts der entsprechenden Zeichenkette an den Speicherorten der entsprechenden Subtyp-Seriennummern im Wertespeicherfeld; und
für den Fall, dass ein gültiges Feld keine Zeichenkette ist, das Ermitteln (304) von Attributwerten der entsprechenden Subtypen und das Speichern (304) der Attributwerte an den Speicherorten der entsprechenden Subtyp-Seriennummern im Wertespeicherfeld.

4. Verfahren nach einem der Ansprüche 1 bis 3, wobei die Typ-ID-Daten und die Attributwertdaten als Ganzzahlen variabler Länge gespeichert werden.

5. Vorrichtung (400) zum Speichern eines Bestimmungstextes, umfassend:
ein Erfassungsmodul (410), das so konfiguriert ist, dass es einen zu speichernden Bestimmungstext erfasst, wobei der Bestimmungstext eine Vielzahl von Feldern umfasst und in Form einer Textdatei gespeicherte Tabellendaten darstellt;
ein Erzeugungsmodul (420), das so konfiguriert ist, dass es gültige Felder aus der Vielzahl von Feldern ermittelt und entsprechend den gültigen Feldern eine Feldtyptabelle abfragt, um ein Datenbeschreibungsfeld des Bestimmungstextes zu erzeugen, wobei die gültigen Felder Felder sind, die in dem zu speichernden Bestimmungstext gespeichert werden müssen;
ein Bestimmungsmodul (430), das so konfiguriert ist, dass es ein Wertspeicherfeld des Bestimmungstextes entsprechend den Inhalten der Vielzahl von Feldern und der Feldtyp-Tabelle bestimmt, wobei die Feldtyp-Tabelle eine Vielzahl von Typen umfasst, wobei die Vielzahl von Typen einen Ganzzahltyp, einen Gleitkommatyp, einen Zeichenfolgentyp, einen Aufzählungstyp und einen Datums- und Uhrzeittyp umfasst, wobei jeder der Vielzahl von Typen eine Typ-Kennung und eine Menge von Untertypen umfasst; jeder Untertyp in der Menge der Untertypen eine entsprechende Untertyp-Seriennummer und ein Attribut aufweist, wobei das Attribut eine Attributnummer, einen Attributtyp, einen Standardwert und eine Festlegung darüber umfasst, ob ein entsprechender Wert null sein darf;
wobei das Erzeugungsmodul (420) so konfiguriert ist, dass es:
einen jeden der gültigen Felder entsprechenden Typ aus der Feldtyptabelle abruft;
Typ-ID-Daten gemäß einer Typ-Kennung erzeugt, die dem jedem der gültigen Felder entsprechenden Typ entspricht;
Untertyp-Seriennummern von Untertypen in einer Menge von Untertypen des Typs, der jedem der gültigen Felder entspricht, ermittelt;
Attributwertdaten entsprechend den entsprechenden Subtyp-Seriennummern erzeugt, wobei die Attributwertdaten entsprechend einer Feststellung darüber erzeugt werden, ob jeder Subtyp im Bestimmungstext vorhanden ist; und
Erzeugen des Datenbeschreibungsfeldes auf der Grundlage der Typ-ID-Daten und der Attributwertdaten; und
ein Speichermodul (440), das so konfiguriert ist, dass es das Datenbeschreibungsfeld und das Wertspeicherfeld speichert, um den Bestimmungstext zu speichern.

6. Vorrichtung (400) nach Anspruch 5, wobei das Bestimmungsmodul (430) so konfiguriert ist, dass es: das Wertspeicherfeld des Bestimmungstextes entsprechend den Inhalten der gültigen Felder und der Feldtyp-Tabelle bestimmt.

7. Vorrichtung (400) nach Anspruch 6, wobei das Bestimmungsmodul (430) so konfiguriert ist, dass es:
Subtyp-Seriennummern ermittelt, die den gültigen Feldern entsprechen;
Speicherorte der Seriennummern der Untertypen im Wertespeicherfeld ermittelt;
in dem Fall, dass ein gültiges Feld eine Zeichenkette ist, den Inhalt der entsprechenden Zeichenkette an den Speicherorten der entsprechenden Subtyp-Seriennummern im Wertespeicherfeld speichert; und
für den Fall, dass ein gültiges Feld keine Zeichenkette ist, Attributwerte der entsprechenden Subtypen ermittelt und die Attributwerte an den Speicherorten der entsprechenden Subtyp-Seriennummern im Wertespeicherfeld speichert.

8. Vorrichtung (400) nach einem der Ansprüche 5 bis 7, wobei die Typ-ID-Daten und die Attributwertdaten als Ganzzahlen variabler Länge gespeichert sind.

9. Elektronisches Gerät, umfassend:
mindestens einen Prozessor; und
einen Speicher, der über eine Kommunikationsverbindung mit dem mindestens einen Prozessor verfügt und so konfiguriert ist, dass er Befehle speichert, die von dem mindestens einen Prozessor ausgeführt werden können,
wobei, wenn die Befehle von dem mindestens einen Prozessor ausgeführt werden, der mindestens eine Prozessor veranlasst wird, das Verfahren zum Speichern des Bestimmungstextes gemäß einem der Ansprüche 1 bis 4 auszuführen.

10. Ein computerlesbares Speichermedium, auf dem Computerbefehle gespeichert sind, wobei die Computerbefehle so konfiguriert sind, dass sie einen Computer veranlassen, das Verfahren zum Speichern des Bestimmungstextes gemäß einem der Ansprüche 1 bis 4 auszuführen.

## Revendications

1. Procédé de stockage d'un texte déterminant, comprenant :
l'obtention (101) d'un texte déterminant qui doit être stocké, le texte déterminant comprenant une pluralité de champs, dans lequel le texte déterminant est une donnée de tableau stockée sous la forme d'un fichier texte ;
l'obtention (102) de champs valides à partir de la pluralité de champs, les champs valides étant des champs qui doivent être stockés dans le texte déterminant qui doit être stocké ;
l'interrogation (102) d'un tableau de types de champ selon les champs valides pour générer un champ de description de données du texte déterminant, dans lequel le tableau de types de champ comprend une pluralité de types, la pluralité de types comprenant un type entier, un type flottant, un type de chaîne de caractères, un type énuméré, et un type de date et d'heure, chacun de la pluralité de types comprenant un identifiant de type et un ensemble de sous-types ; chaque sous-type dans l'ensemble de sous-types présente un numéro de série de sous-type correspondant et un attribut, l'attribut comprend un numéro d'attribut, un type d'attribut, une valeur par défaut et une détermination de si une valeur correspondante est autorisée à être nulle ; dans lequel l'interrogation (102) du tableau de types de champ selon les champs valides pour générer le champ de description de données du texte déterminant, comprend :
l'obtention (201) d'un type correspondant à chacun des champs valides à partir du tableau de types de champ ;
la génération (201) de données d'identification (ID) de type selon un identifiant de type correspondant au type correspondant à chacun des champs valides ;
l'obtention (202) de numéros de série sous-type de sous-types dans un ensemble de sous-types du type correspondant à chacun des champs valides ;
la génération (203) de données de valeur d'attribut selon les numéros de série de sous-type correspondants, dans lequel les données de valeur d'attribut sont générées selon une détermination de si chaque sous-type existe dans le texte déterminant ; et
la génération (204) du champ de description de données sur la base des données d'identifiant (ID) de type et des données de valeur d'attribut ;
la détermination (103) d'un champ de stockage de valeur du texte déterminant en fonction des contenus de la pluralité de champs et du tableau de types de champ ; et
le stockage (104) du champ de description de données et du champ de stockage de valeur pour stocker le texte déterminant.

2. Procédé selon la revendication 1, dans lequel la détermination (103) du champ de stockage de valeurs du texte déterminant selon le contenu de la pluralité de champs et le tableau de types de champ comprend :
la détermination du champ de stockage de valeurs du texte déterminant en fonction du contenu des champs valides et du tableau de types de champ.

3. Procédé selon la revendication 2, dans lequel la détermination du champ de stockage de valeurs du texte déterminant selon le contenu des champs valides et du tableau de types de champ comprend :
l'obtention (301) de numéros de série de sous-types correspondant aux champs valides ;
l'obtention (301) d'emplacements de stockage des numéros de série de sous-types dans le champ de stockage de valeurs ;
dans un cas où un champ valide est une chaîne de caractères, le stockage (303) du contenu de la chaîne de caractères correspondante dans les emplacements de stockage des numéros de série de sous-types correspondants dans le champ de stockage de valeurs ; et
dans un cas où un champ valide n'est pas une chaîne de caractères, l'obtention (304) de valeurs d'attribut des sous-types correspondants, et le stockage (304) des valeurs d'attribut dans les emplacements de stockage des numéros de série de sous-types correspondants dans le champ de stockage de valeurs.

4. Procédé selon l'une quelconque des revendications 1 à 3, dans lequel les données d'identifiant (ID) de type et les données de valeurs d'attributs sont stockées sous la forme d'entiers de longueurs variables.

5. Appareil (400) de stockage d'un texte déterminant, comprenant :
un module d'obtention (410), configuré pour obtenir un texte déterminant qui doit être stocké, le texte déterminant comprenant une pluralité de champs, dans lequel le texte déterminant est une donnée de tableau stockée sous la forme d'un fichier texte ;
un module de génération (420), configuré pour obtenir des champs valides à partir de la pluralité de champs, et interroger un tableau de types de champ selon les champs valides pour générer un champ de description de données du texte déterminant, les champs valides étant des champs qui doivent être stockés dans le texte déterminant qui doit être stocké ;
un module de détermination (430), configuré pour déterminer un champ de stockage de valeurs du texte déterminant en fonction du contenu de la pluralité de champs et du tableau de types de champ, dans lequel le tableau de types de champ comprend une pluralité de types, la pluralité de types comprend un type entier, un type flottant, un type de chaîne de caractères, un type énuméré et un type de date et d'heure, chacun de la pluralité de types comprend un identifiant de type et un ensemble de sous-types ; chaque sous-type de l'ensemble de sous-types a un numéro de série de sous-type correspondant et un attribut, l'attribut comprend un numéro d'attribut, un type d'attribut, une valeur par défaut et une détermination de la nullité autorisée d'une valeur correspondante ;
dans lequel le module de génération (420) est configuré pour :
obtenir un type correspondant à chacun des champs valides à partir du tableau de types de champ ;
générer des données d'identification (ID) de type selon un identifiant de type correspondant au type correspondant à chacun des champs valides ;
obtenir des numéros de série de sous-type de sous-types dans un ensemble de sous-types du type correspondant à chacun des champs valides ;
générer des données de valeur d'attribut selon les numéros de série de sous-type correspondants, dans lequel les données de valeur d'attribut sont générées selon une détermination de l'existence ou non de chaque sous-type dans le texte déterminant ; et
générer le champ de description de données sur la base des données d'identifiant (ID) de type et des données de valeur d'attribut ; et
un module de stockage (440), configuré pour stocker le champ de description de données et le champ de stockage de valeurs pour stocker le texte déterminant.

6. Appareil (400) selon la revendication 5, dans lequel le module de détermination (430) est configuré pour : déterminer le champ de stockage de valeurs du texte déterminant en fonction du contenu des champs valides et du tableau de types de champ.

7. Appareil (400) selon la revendication 6, dans lequel le module de détermination (430) est configuré pour :
obtenir les numéros de série des sous-types correspondant aux champs valides ;
obtenir des emplacements de stockage des numéros de série des sous-types dans le champ de stockage de valeurs ;
dans un cas où un champ valide est une chaîne de caractères, stocker le contenu de la chaîne de caractères correspondante dans les emplacements de stockage des numéros de série de sous-type correspondants dans le champ de stockage de valeurs ; et
dans un cas où un champ valide n'est pas une chaîne de caractères, obtenir les valeurs d'attribut des sous-types correspondants et stocker les valeurs d'attribut dans les emplacements de stockage des numéros de série de sous-type correspondants dans le champ de stockage de valeurs.

8. Appareil (400) selon l'une quelconque des revendications 5 à 7, dans lequel les données d'identifiant (ID) de type et les données de valeur d'attribut sont stockées sous la forme d'entiers de longueurs variables.

9. Dispositif électronique, comprenant :
au moins un processeur ; et
une mémoire ayant une connexion de communication avec l'au moins un processeur et configurée pour stocker des instructions exécutables par l'au moins un processeur,
lorsque les instructions sont exécutées par l'au moins un processeur, l'au moins un processeur est amené à exécuter le procédé de stockage du texte déterminant selon l'une quelconque des revendications 1 à 4.

10. Support de stockage lisible par ordinateur sur lequel sont stockées des instructions informatiques, dans lequel les instructions informatiques sont configurées pour amener un ordinateur à exécuter le procédé de stockage du texte déterminant selon l'une quelconque des revendications 1 à 4.
